# EUROPEAN PATENT APPLICATION

(11) **EP 1 698 454 A1**
(43) Date of publication of application: **06.09.2006**
(21) Application number: 06004208.2
(22) Date of filing: 02.03.2006
(51) Int. Cl.: B32B 17/10, G06K 19/077, H01Q 1/12, B60J 1/02, G07C 9/00, G08B 13/24

(54) **Panel and panel manufacturing method**

(30) Priority: 04.03.2005 JP 2005061625
(71) Applicant: Nippon Sheet Glass Company, Limited, Tokyo 105-8552 (JP)
(72) Inventor: Ohara, Shohei, c/o Nippon Sheet Glass Co., Ltd., Minato-ku, Tokyo 105-8552 (JP); Kokuryo, Kazuto, Shiga 520-2144 (JP); Matsushita, Yoshimitsu, Nippon Sheet Glass Co, Ltd, Minato-ku, Tokyo 105-8552 (JP)
(74) Representative: HOFFMANN EITLE

(57) **Abstract**

An electronic tag includes an antenna and a radio chip attached to the electronic tag such that the radio chip is connected to the antenna so as to transmit identification information in response to a request provided from outside through radio communication via the antenna. A first sheet glass and a second sheet glass are positioned such that surfaces thereof are made to face each other with the electronic tag held therebetween. An interlayer film is disposed between the first sheet glass and the second sheet glass so as to join the sheet glasses to each other. Two or more interlayer films are superposed on each other in at least part of an area defined between the first sheet glass and the second sheet glass, and the electronic tag is attached to the supposed interlayer films so as to be held therebetween.

## Description

### BACKGROUND OF THE INVENTION

### 1. Field of the Invention

The present invention relates to a panel having a function to transmit an identification signal and a manufacturing method for manufacturing the same panel.

### 2. Related Art

In recent years, management technologies making use of electronic tags (also referred to as radio frequency identification or RFID tags) have been propagating. Electronic tags are used such that they are affixed to surfaces of products by adhesive or pressure sensitive adhesive double coated tapes. It is proposed that electronic tags be attached to a wide range of articles from small items such as parcels to consumer durables such as automobiles and domestic building materials so as to obtain various types of information therefrom via radio communication for use for control the articles. For example, JP 2004-326573A discloses a motor vehicles control system in which electronic tags in each of which individual vehicle identifying information is written are attached to motor vehicles so as to control them by making use of such individual vehicle identifying information written in the tags.

In a case where an electronic tag is attached to a motor vehicle as in the system disclosed in JP 2004-326573A, wile affixing the tag to the surface of a body of the vehicle facilitates the handling thereof, the tag can easily be removed therefrom, leading to a risk where the tag so affixed may be replaced with another tag by a person who has an evil intention. In addition, it is considered that the electronic tag is damaged by an external factor. To avoid these problems, the electronic tag may be sealed in an interior of the body, however, the sealing of the electronic tag in such a way causes a problem where metallic parts making up the body shut off radio waves that are to be received by the electronic tag.

### SUMMARY OF THE INVENTION

The invention was made in view of the problem, and an object thereof is to provide an effective installation technique of the electronic tag.

According to an aspect of the invention, there is provided a panel including an electronic tag including an antenna and a radio chip connected to the antenna, a plurality of thin sheets of a glass material which hold the electronic tag therebetween, and a joint member which supports the electronic tag at a fixed position with respect to the thin sheets.

According to the aspect of the invention, since the electronic tag is made to be held between the thin sheets of a glass material with the joint member, the removal of the electronic tag can be prevented.

Note that when used herein, the "thin sheet" denotes a member having a flat surface on at least one of sides thereof so that when the thin sheets are made to face each other, the electronic tag can be held between the flat surfaces of the thin sheets and can include, for example, an elongate rod which is flat on one of sides thereof. In addition, the thin sheet may be flat entirely or may be formed into a curved shape partly or entirely. The "glass material" may be glass, resin such as polycarbonate or ceramics such as quartz. In addition, the visible light transmission of the glass material is not a matter of interest.

According to another aspect of the invention, there is provided a panel including an electronic tag including an antenna and a radio chip mounted such that the radio chip is connected to the antenna so as to transmit identification information in response to a request provided from outside through a radio communication via the antenna, a plurality of thin sheets of a glass material which are positioned such that surfaces thereof are made to face each other, and one or more interlayer films which are interposed between the plurality of thin sheets so as to join the thin sheets to each other. In addition, the interlayer films are superposed twofold or more in at least part of an area defined between the plurality of thin sheets with the electronic tag attached to the superposed interlayer films so as to be held therebetween.

According to this aspect of the invention, since the interlayer films are joined to the thin sheets of a glass material within the space defined between the thin sheets which are made to face each other in such a state the interlayer films hold the electronic tag therebetween, it is made difficult for the electronic tag to be removed from the panel, thereby making it possible to prevent the damage to the electronic tag, as well as the replacement of the electronic tag with another one with an evil intention. In addition, since a direct contact of the electronic tag with the thin sheets can be eliminated by the interlayer films, a damage to the thin sheets by the electronic tag can be prevented.

A coloring layer which interrupts the transmission of light may be formed to face at least one of the plurality of thin sheets so as to cover and hide the electronic tag thereunder, whereby the electronic tag is prevented from being exposed directly to sunlight, thereby making it possible to prevent the deterioration of a material making up the electronic tag.

When assuming a cross section of the electronic tag that is taken along a perpendicular direction with respect to surfaces of the thin sheets, the electronic tag is preferably molded into a shape of which the thickness gradually reduces along a longitudinal direction of the thin sheets. According to this configuration, since a gap formed between the electronic tag and the interlayer films can be reduced, the electronic tag is easily held at the fixed position.

According to a further aspect of the invention, there is provided a panel including a thin sheet made of a glass material, a fixing frame which holds the thin sheet at a fixed position, an electronic tag including an antenna and a radio chip mounted such that the radio chip is connected to the antenna so as to transmit identification information in response to a request provided from outside through a radio communication via the antenna and disposed between the thin sheet and the fixing frame, a first interlayer film which faces the thin sheets, and a second interlayer film which faces the fixing frame. In addition, the electronic tag is attached to the first interlayer film and the second interlayer film so as to be held therebetween.

According to this aspect of the invention, since the electronic tag is disposed between the thin sheets of a glass material and the fixing frame, the removal of the electronic tag can be prevented.

According to an aspect of the invention, there is provided a panel manufacturing method including the steps of holding an electronic tag with a plurality of layers of interlayer films, the electronic tag comprising an antenna and a radio chip mounted such that the radio chip is connected to the antenna so as to transmit identification information in response to a request provided from outside through a radio communication via the antenna, holding the interlayer films between thin sheets of a glass material which are disposed such that surfaces thereof are made to face each other, and pressurizing or depressurizing the thin sheets so as to remove a void existing inside of the thin sheets which are made to face each other so that the interlayer films are made to be joined to the thin sheets, respectively.

Note that what results from combinations of the respective constituent elements or steps is also included in the scope of the invention.

According to the invention, since the electronic tag is disposed within the space defined between the thin sheets of a glass material which are made to face each other or the thin sheet and the fixing frame, the electronic tag can be installed effectively with respect to the panel.

### BRIEF DESCRIPTION OF THE PREFERRED EMBODIMENTS

Fig. 1 is a drawing which shows external appearances of an electronic tag according to Embodiment 1 of the invention, in which Fig. 1A is a plan view, Fig. 1B is a front view and Fig. 1C is a side view of the electronic tag.

Fig. 2 is a block diagram which shows a functional configuration of a semiconductor chip.

Fig. 3 is a sectional view of a glass panel including the electronic tag resulting when the glass panel is cut along a perpendicular direction with respect to a glass surface of the panel.

Fig. 4 is a sectional view of the glass panel resulting after sheet glasses and interlayer films have been joined to each other.

Fig. 5 is a sectional view of a glass panel in which two layers of interlayer film are provided only at part of the glass panel.

Fig. 6 is a sectional view of a glass panel in which a coloring layer is formed on only one of sheet glasses.

Fig. 7 is a drawing which describes the disposition of the electronic tag in the event that a sheet glass is fixed by a resin frame according to Embodiment 2.

Fig. 8 is a sectional view of the fixing frame and the sheet glass after an injection molding has been completed.

Fig. 9 is a drawing which shows a state in which an electronic tag that is molded to have an oval cross section and interlayer films are joined to each other.

### DETAILED DESCRIPTION OF THE PREFERRED EMBODIMENTS

The invention provides a panel in which an electronic tag in which data such as an identification number is recorded is disposed in such a manner as not to be removed easily by causing the electronic tag to be held between thin sheets. In the following embodiments, a glass panel will be described in which sheet glasses are used as thin sheets. A panel which uses a glass material other than the sheet glasses will be described at the end of this specification as a modified example. Note that when used herein, the "thin sheet" denotes a member having a flat surface on at least one of sides thereof so that when the thin sheets are made to face each other, the electronic tag can be held between the flat surfaces of the thin sheets and can include, for example, an elongate rod which is flat on one of sides thereof.

### Embodiment 1

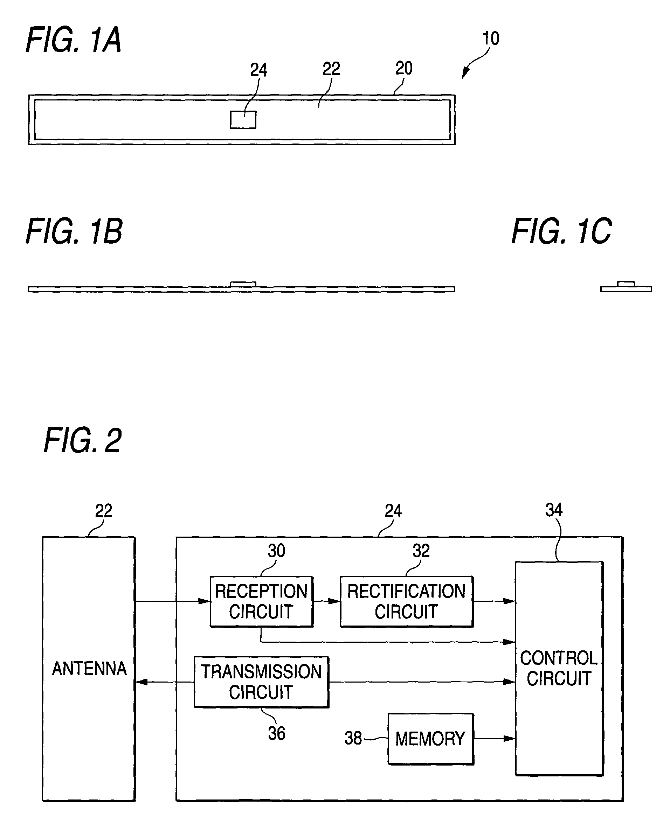

Fig. 1 shows external appearances of an electronic tag 10 which is disposed in a glass panel according to Embodiment 1, wherein Fig. 1A is a plan view, Fig. 1B is a front view and Fig. 1C is a side view of the electronic tag 10. The electronic tag 10 includes an insulation film 20 which is formed into a strip-like shape, an antenna 22 formed on a side of the insulation film for transmitting and receiving radio waves such as microwaves and a semiconductor chip 24 which is a radio chip which is connected to the antenna 22 and which transmits predetermined data in response to a request provided from outside through radio communication via the antenna 22.

The electronic tag 10 is configured such that data are stored in a memory circuit within the semiconductor chip 24, so that the data so stored can be read out in a non-contact fashion by radio waves such as microwaves or UHF waves. Since in the electronic tag 10 configured as has been just described, data are stored in a semiconductor chip, a large volume of data compared to bar codes or two-dimensional bar codes can be kept recorded therein. In addition, since the electronic tag 10 is different from bar codes or two-dimensional bar bodes in that it is not a printed matter, there is provided an advantage where alteration of the data stored therein is difficult.

The antenna 22 is formed by coating on the resin insulation film 20 a conductive material such as a conductive paste made of mainly copper or silver. The antenna 22 is designed so as to transmit and receive a radio wave of a specific frequency (for example, a microwave of 2.45GHz) with good efficiency. While as one example of the shape of the antenna, a loop antenna is used, other shapes may be used.

The length of the insulation film 20 is, for example, 53mm, and the width of the insulation film is, for example, 1.5mm. In addition, a maximum thickness of the electronic tag 10 is in the order of 0.25mm. The semiconductor chip 24 is, for example, a single crystal silicone substrate, and a circuit as illustrated in a functional block diagram shown in Fig. 2, which will be described later on, is formed thereon. Since the thin antenna is formed on the side of the insulation film, the electronic tag 10 is thin and flexible.

The semiconductor chip 24 is a so-called passive semiconductor chip which is driven using an electromotive force generated by radio waves received from the outside. Since the passive radio chip like this can be made smaller in size than an active one having a power supply incorporated therein by such an extent that the former has no power supply incorporated therein, even in the event that the passive radio chip is provided on an article such as a glass panel in which the external appearance thereof is regarded important, the good appearance thereof cannot be damaged badly. An example of the external shape or size of the semiconductor chip is 0.4mm×0.4mm.

The antenna 22 and Lhe semiconductor chip 24 may be sealed in a resin. In addition, the side of the insulation film 20 on which the antenna 22 is formed may be covered or coated with a protection resin film so as to prevent a damage to or disconnection of the conductive material due to an external impact.

Fig. 2 is a block diagram which illustrates the functional configuration of the semiconductor chip 24. The semiconductor chip 24 includes a reception circuit 30, a rectification circuit 32, a control circuit 34, a transmission circuit 36 and a nonvolatile memory 38. The reception circuit 30 outputs a radio wave received by the antenna 22 to the rectification circuit 32 and generates a clock signal from the radio wave received by the antenna 22 for output to the control circuit 34. The rectification circuit 32 rectifies the radio wave transmitted from the reception circuit 30 and converts the radio wave so rectified into electric power which constitutes a drive source for the control circuit 34, outputting the electric power so converted to the control circuit 34.

At least a specific identification number is written in the memory 38, and in addition to the number, various types of data can be stored in the memory 38. The identification number can be used to control a glass panel In which the electronic tag 10 is provided through radio transmission of the number. As examples of data that are stored in the memory 38, there are raised production number, production period, production site, production process and distribution history, as well as constituents and/or functions of glass. However, the data to be stored in the memory 38 are not limited thereto.

When a clock signal is inputted thereinto from the reception circuit 30, the control circuit 34 fetches predetermined data from the memory 38 and outputs an information signal corresponding to the data so fetched together with a transmission signal to the transmission circuit 36. The transmission circuit 36 modulates the transmission signal inputted from the control circuit 34 with the information signal and transmits the signal so modulated to the outside via the antenna 22. The signal so transmitted is received by read equipment (not shown) placed at an external side.

In the semiconductor chip 24, radio waves of various kinds of frequencies can be used, the frequencies including 135kHz, 13.56MHz, 433MHz, 869MHz, 915MHz and 2.45GHz. These radio waves have their own characteristics. Consequently, the electronic tag 10 is preferably used to match the characteristics of radio waves that are provided by the respective frequencies. For example, since a radio wave of 869MHZ enables a long distance communication, the radio wave is convenient when used such that the electronic tag 20 is distant from the read equipment. In addition, since the electronic tag 10 can be made smaller in size when designed to use a radio wave of 2.45GHz, the radio wave of that frequency is convenient when attempting to make the electronic tag 10 provided on the glass surface less noticeable.

While, in the following description, the semiconductor chip 24 will be described as a read-only chip, a semiconductor chip such as an EEPROM which can both read and write can be used. In the event of the latter, for example, in case it is designed that data can be added to the memory at each stage of a flow of distribution, there is provided an advantage where the control of distribution history can be facilitated further.

Embodiment 1 is a glass panel in which the removal of the electronic tag 10 is made difficult by disposing the electronic tag 10 in a space held by two sheet glasses.

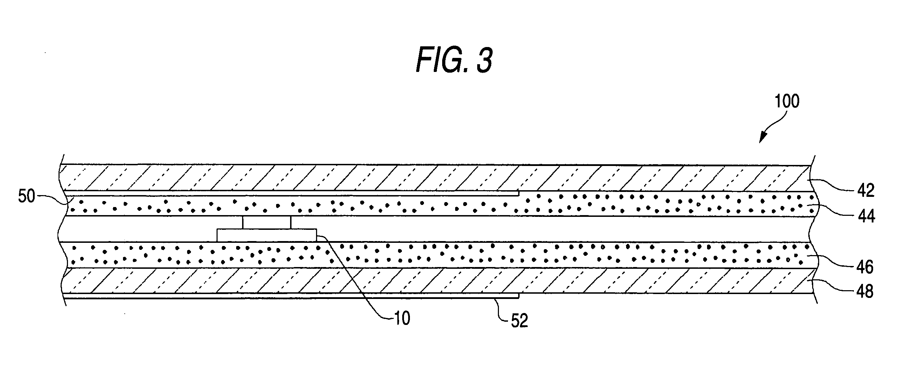

Fig. 3 shows a sectional view of a glass panel 100 according to Embodiment 1 which has the electronic tag 10 incorporated therein taken along a perpendicular direction with respect to glass surfaces of the panel 100. Note that since this drawing is intended to describe a positional relationship of respective constituent members, the thickness is drawn in an exaggerated fashion.

The glass panel 100 is a so-called laminated glass in which a first interlayer film 44 and a second interlayer film 46 which are made of a tough resin (for example, polyvinyl butyral or PVB) are held between a first sheet glass 42 and a second sheet glass 48 and has a higher strength than normal glasses. This glass panel 100 is manufactured as follows. Firstly, the first interlayer film 44 and the second interlayer film 46 which hold the electronic tag 10 therebetween are put to be held between the first sheet glass 42 and the second sheet glass 48, so as to be temporarily bonded to both the sheet glasses, respectively. The sheet glasses and the interlayer films, which are bonded to each other temporarily, are then put in an autoclave, and the first sheet glass 42 and the second sheet glass 48 are pressurized or depressurized so as to remove a void existing inside the two sheet glasses which are made to face each other to thereby cause the interlayer films to be joined to both the sheet glasses, respectively. Whether to perform pressurization or depressurization is determined depending on the shape of a laminated glass and/or the properties of the interlayer films. In the laminated glass like this, since the strength of the interlayer films is high and the interlayer films and the sheet glasses are bonded to each other strongly, even in case the surface of the sheet glass is broken, the glass so broken is made difficult to be spread or fall in fragments. Note that the first sheet glass 42 and the second sheet glass 48 may be a glass which is flat entirely or is formed into a shape which is curved partially or entirely as of an automotive windshield.

The thickness of each of the first interlayer film 44 and the second interlayer film 46 is, for example, 0.38mm or 0.76mm and are made to overlay the entirety of the first sheet glass 42 and the second sheet glass 48, respectively. Functions such as noise insulating function, coloring function, ultraviolet ray cutting function and the like can be imparted to the glass panel 100 by these interlayer films. In addition, as shown in Fig. 3, a plurality of functions can be imparted to the glass panel 100 by superposing the plurality of interlayer films on each other.

A first coloring layer 50 and a second coloring layer 52, which both interrupt the transmission of light, may be formed so as to face the first sheet glass 42 and the second sheet glass 48, respectively. When used herein, the "coloring" layer denotes painting or printing which is made to conceal an adhesive coated portion where the glass panel is bonded to the fixing frame so as not only to increase the appearance of the glass panel from an aesthetic point of view but also to prevent the deterioration of coated adhesive due to sunlight or which is made mainly along a circumferential edge portion of the glass panel for the purpose of decoration, when the glass panel according to the embodiment is applied to an automotive windshield, for example. The coloring layer is formed, for example, by being screen printed on the relevant portion of the glass surface with a ceramic paste which contains glass frit having a low fusion point.

In a case where the glass panel 100 is used as an automotive windshield, assuming that the first sheet glass constitutes an outside of the vehicle, while the second sheet glass does an inside of the vehicle, the first coloring layer 50 which is to lie on the outside of the vehicle is preferably formed between the first sheet glass 42 and the first interlayer film 44. This is because a damage can be prevented which is to be made to the first coloring layer 50 by an external factor.

In addition, as shown in Fig. 3, the coloring layer may be formed on the sides of both the first sheet glass 42 and the second sheet glass 48 or on the side of either of the first and second sheet glasses 42, 48, or no coloring lay may be formed. Alternatively, instead of providing a coloring layer, either of the two sheet glasses or the two interlayer films may be colored. In this event, the entirety of the sheet glass or the interlayer film may be colored or only a portion thereof which needs coloring may be colored.

The electronic tag 10 is disposed between the first interlayer film 44 and the second interlayer film 46. In general, when an electronic tag is attached to a glass panel, it is considered that the electronic tag is attached to a surface of the glass panel using an adhesive or adhesive coated tape. In the event that the electronic tag is attached using such a method, however, the electronic tag is easily removed from the glass panel, and since the electronic tag is subjected to a direct contact, there is caused a risk where the electronic tag is damaged.

In case the electronic tag is held between a sheet glass and an interlayer film to prevent the risk, since no adhesion is provided on a contact surface between the electronic tag and the sheet glass, when the glass panel deforms, the electronic tag detaches from the sheet glass. As this occurs, the electronic tag is displaced on the surface of the sheet glass while rubbing thereagainst, resulting in a risk where the glass surface is damaged or a conductor of an antenna on the electronic tag disconnects.

To cope with this problem, in Embodiment 1, the electronic tag is disposed between the two interlayer films.

The glass panel 100, which is a single laminated glass, is molded by putting the sheet glasses and the interlayer films which are configured as shown in Fig. 3 in an autoclave to heat them therein, and pressurizing or depressurizing the sheets so as to remove a void existing inside of the sheet glass which are made to face each other, so that the first sheet glass 42 and the first interlayer film 44, the second sheet glass 48 and the second interlayer film 46 and the interlayer films are joined to each other, respectively.

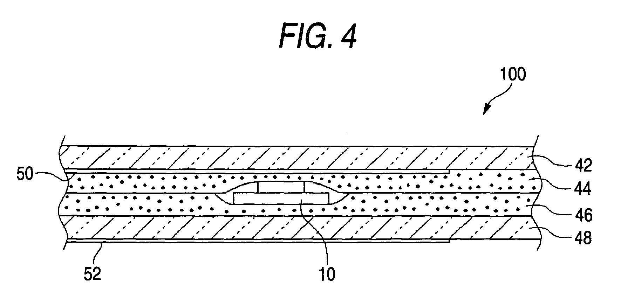

A sectional view of the glass panel 100 so molded is shown in Fig. 4. When depressurized, the first interlayer film 44 and the second interlayer film 46 press hold the electronic tag 10 therebetween from vertical directions at a portion where the electronic tag 10 is disposed. Dents are produced in the first interlayer film 44 and the second interlayer film 46 due to compression, and the first interlayer film 44 and the second interlayer film 46 come to adhere to the periphery of the electronic tag 10, producing a state in which the electronic tag 10 is held therebetween. Due to this, even in case the electronic tag 10 deforms due to a load or the first sheet glass 42 and the second sheet glass 48 expand due to heat, the position of the electronic tag 10 within the glass panel is fixed. In addition, since the electronic tag 10 is held by the first interlayer film 44 and the second interlayer film 46, a direct contact between the first sheet glass 42 and the second sheet glass 48 is avoided, thereby making it possible to prevent a damage that would otherwise be made to the sheet glasses by the electronic tag 10.

A gap formed between the electronic tag 10 and the first interlayer film 44 and the second interlayer film 46 is preferably as small as possible. This is because with a gap existing therebetween, the electronic tag is made easy to be dislocated when the glass panel 100 deforms. In addition, the thickness of the first interlayer film 44 and the second interlayer film 46 preferably remains the same between portions where the electronic tag 10 is held therebetween and the remaining portions thereof. Consequently, the thickness of the first interlayer film 44 and the second interlayer film 46 is preferably selected in consideration of the thickness of the electronic tag 10 and an amount of deformation of the interlayer films when they hold the electronic tag 10 therebetween.

In the event that the first coloring layer 50 and the second coloring layer 52 are printed, the electronic tag 10 is preferably disposed at a position which overlaps the first coloring layer 50 and the second coloring layer 52 as shown in Fig. 4. According to this configuration, when the user looks at the glass panel 100 from the side where the coloring layer exists, the user has difficulty in recognizing the electronic tag 10, the appearance of the glass panel being thereby improved from an aesthetic point of view.

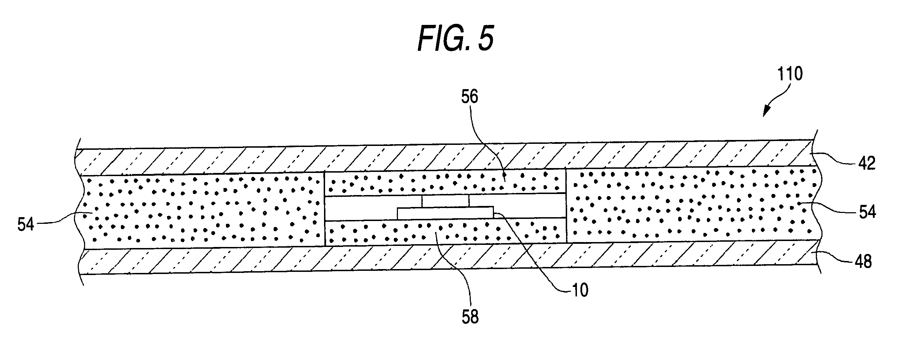

Fig. 5 is a sectional view of a glass panel 110 in which two layers of interlayer film are provided at only one area thereof.

Since a portion of a glass panel where the electronic tag is incorporated is very limited compared to the overall area thereof, there exists a case where affixing two interlayer films to sheet glasses to the full extent thereof is wasteful in terms of working time and cost. Consequently, a sheet of interlayer film 54 is first superposed on either a first sheet glass 42 or a second sheet glass 48. Following this, an area of an appropriate shape is hollowed out in the interlayer film 54 so superposed at a position which surrounds where the electronic tag 10 is to be disposed. Then, a first piece of interlayer film 56 and a second piece of interlayer film 58, which both have the same planar shape as that of the interlayer film 54 in which the area is hollowed out, are forced into the hollowed out portion of the interlayer film 54 such that the electronic tag 10 is held therebetween. As this occurs, the thickness of the first piece of interlayer film 56 and the second piece of interlayer film 58 is preferably selected so as to eventually realize the same thickness as a thickness resulting when the first sheet glass 42 and the second sheet glass 48 are depressurized so as to remove a void existing therebetween to thereby allow the sheet glasses and the interlayer film 54 to be joined to each other. Thus, the reduction in cost and working time in relation to the installation of the interlayer films is enabled by using the two pieces of interlayer film 56, 58 only at the area of the interlayer film 54 which surrounds the location where the electronic tag 10 is positioned.

In addition, in the configuration shown in Fig. 5, too, the coloring layer may be formed to face either or both of the first sheet glass 42 and the second sheet glass 48.

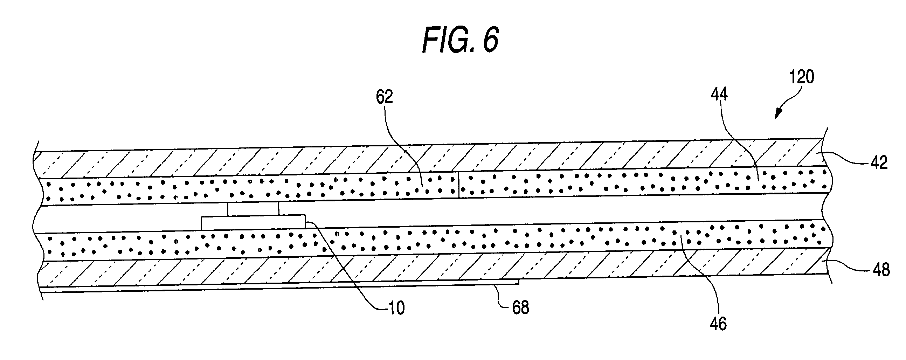

Fig. 6 is a sectional view of a glass panel 120 which results when a coloring layer is formed on one side of only one of sheet glasses. As shown in the figure, when a coloring layer 68 is formed on one side of a second sheet glass 48, while no coloring layer is formed on a first sheet glass 42, the electronic tag 10 becomes visible from the side of the first sheet glass 42. To prevent this, an interlayer film 62 which is colored in a color that is difficult to be discriminated from the coloring layer 68 or a color of the same family as that of the coloring layer 68 is disposed only at an area on an interlayer film to be joined to the first sheet glass 42 which surrounds a location where the electronic tag 10 is disposed. By adopting this configuration, even in case there is provided no coloring layer on the first sheet glass 42, the visualization of the electronic tag 10 is made difficult, the appearance of the glass panel 120 being thereby improved from an aesthetic point of view.

As has been described heretofore, in Embodiment 1, the glass panel is configured by joining the sheet glasses using the two interlayer films which hold th.e electronic tag therebetween or the interlayer film with the two pieces of interlayer film provided only at the peripheral portion of the electronic tag to hold the tag therebetween. By adopting this configuration, since the electronic tag is disposed inside the two sheet glasses which are made to face each other, the removal of the electronic tag from the glass panel becomes difficult. Consequently, the electronic tag can be protected from damage, replacement, stealing and tampering, as well as from deterioration due to atmospheric and water-related factors. Furthermore, the deterioration of the electronic tag due to sunlight can also be prevented by disposing the electronic tag behind the coloring layer.

### Embodiment 2

While in Embodiment 1, the electronic tag is described as being held between the inner sides of the laminated glass, the invention can be applied to glasses having constructions other than that of the laminated glass in which the plurality of sheet glasses are affixed to each other.

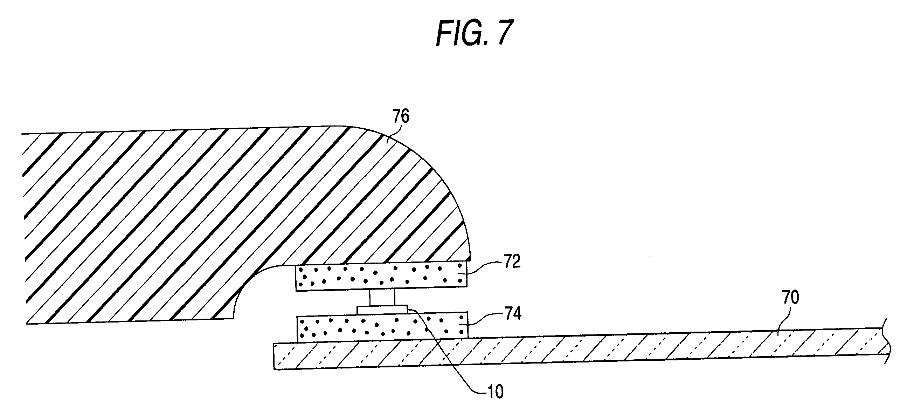

Fig. 7 is a drawing which describes the position of the electronic tag in a case where a sheet glass is fixed by a resin frame. For example, a case is assumed where a sheet glass 70, which is a reinforced glass, is fixed by a fixing frame 76. The fixing frame 76 is a structure for fixing the sheet glass 70 to another member, for example, a window or sash of a vehicle.

The fixing frame like this is generally molded on a circumferential edge of the sheet glass 70 through injection molding. In this event, in case the electronic tag 10 is placed to simply rest on the sheet glass 70 during injection molding, there may be caused a risk where the electronic tag 10 is damaged by the injection molding pressure.

Then, as with Embodiment 1, the electronic tag 10 is placed on the sheet glass 70 such that the electronic tag 10 is held by a first interlayer film 72 and a second interlayer film 74, and the sheet glass 70 is set in a mold in that state for injection molding of a fixing frame 76.

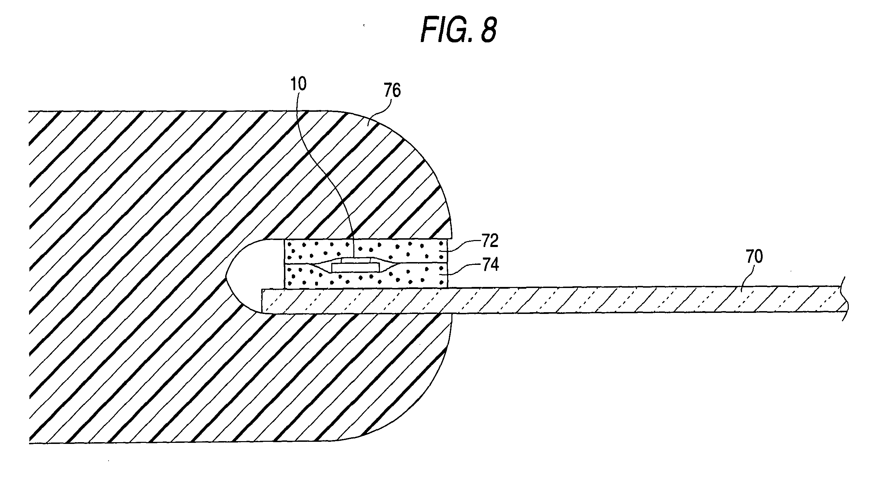

Fig. 8 shows a sectional view of the fixing frame 76 and the sheet glass 70 after the injection molding. As shown in the figure, since the electronic tag 10 is put such that the perimeter of the electronic tag 10 is surrounded by the sheet glass 70, the fixing frame 76, the first interlayer film 72 and the second interlayer film 74, an easy removal of the electronic tag 10 is prevented. In addition, the fixing frame 76 disables the electronic tag 10 from being visualized, the appearance of the sheet glass 70 is improved from an aesthetic point of view. Furthermore, for example, when a radio communication is conducted using the electronic tag 10 for the purpose of preventing a crime, since a third person has difficulty in recognizing the existence of the electronic tag, the crime preventive effect can be enhanced.

In addition, even in the event that the sheet glass 70 is a laminated glass, the electronic tag can be disposed at a joining portion between the laminated glass and the fixing frame using a similar method to that described above.

Next, an application example of the invention will be described. The glass panel according to Embodiment 1 or 2 can be applied to a windshield or backlight of a vehicle. When applied to the windshield of the vehicle, by recording data such as production number, production period, and production site of a windshield or constituent and function of the glass in the electronic tag 10, a replacement glass can quickly be selected in the event of fracture of the windshield. In addition, in case data such as the registration number of a vehicle or information on the owner of the vehicle are recorded in the electronic tag 10, when the vehicle is stolen, the vehicle can be easily be identified as the stolen vehicle. In this case, since the electronic tag is disposed at the portion which makes it difficult for the electronic tag to be removed, it will be difficult to disguise the vehicle by replacing the electronic tag with a new tag. Furthermore, since an attempt to disguise the vehicle by replacing the whole windshield with a new one involves lots of labor hours, such an attempt is difficult to be attained.

The invention has been described heretofore based on the embodiments. These embodiments are such as to illustrate the invention, and the respective constituent elements of the embodiments can be combined variously or the designs thereof can be changed variously. In addition, it is obvious to those skilled in the art that resulting altered or modified examples can fall within the scope of the invention. Hereinafter, such modified examples will be described.

In the embodiments, the electronic tag has been described which has the construction in which the semiconductor chip is placed on the insulation film. In the electronic tag configured in such a way, the gap still remains on the periphery of the electronic tag, as shown in Fig. 4, even after the sheet glasses and the interlayer films have been joined to each other. The existence of the gap like this produces a state in which the electronic tag is easily-dislocated, as well as a state in which the electronic tag is only allowed to remain in point contact with the sheet glasses at end portions thereof in the event that the glass panel 100 deforms, whereby stress is exerted on the sheet glasses locally.

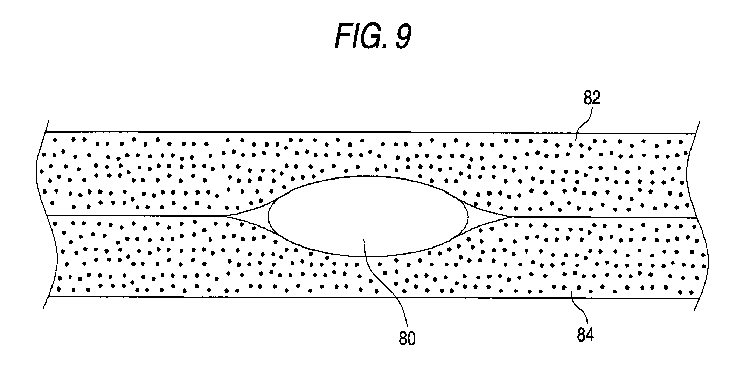

Then, the electronic tag on the film may be encapsulated by a resin so as to be formed into a shape which provides an oval cross section when taken along a perpendicular direction with respect to the glass surface as with an electronic tag 80 shown in Fig. 9. By adopting this configuration, since a gap defined between the electronic tag 80 and interlayer films 82, 84 can be reduced, the electronic tag is easily held at a fixed position.

In addition, the cross-sectional shape of the electronic tag is not limited to an oval one as shown in Fig. 9, and hence, other cross-sectional shapes may be taken, provided that a cross section resulting when the electronic tag held by the facing sheet glasses is cut perpendicularly with respect to the glass surface is formed into a shape in which the thickness gradually reduces from a central portion toward both ends thereof.

In the embodiments, it is described that the electronic tag is held by the two interlayer films and the interlayer films are then held by the two sheet glasses, whereafter the sheet glasses are pressurized or depressurized so as to remove the void existing inside the facing sheet glasses, so that the interlayer films and the sheet glasses are joined to each other. An alternative procedure may be adopted in which two sheets of interlayer film are prepared which have been compressed to be joined tu each other in advance with the electronic tag held therebetween, and after the interlayer films that incorporate therein the electronic tag are placed between two sheet glasses to thereby be held therebetween, the sheet glasses are depressurized so as to remove a space defined between the sheet glasses, so that the sheet glasses and the interlayer films are joined to each other.

The size and thickness of the electronic tag can be selected as appropriately depending on an interval at which the sheet glasses are disposed so as to face each other. As an example, in the event that the interval between the sheet glasses is relatively wide, an electronic tag which is sealed in a cylindrical capsule can be used.

While, in the embodiments, the passive electronic tag is described, an active electronic tag may be used in which a solar panel is affixed to the surface of the sheet glass, and a semiconductor chip is connected to a power supply such as the solar panel so affixed.

While, in the embodiments, the electronic tag is described as being held between the two sheet glasses via the interlayer films, the electronic tag may be held between, for example, two elongate rods of glass each having a flat side via interlayer films.

In the aforesaid description, while the sheet glasses are described as being used as thin sheets which hold the electronic tag therebetween, as the thin sheets, glass materials like sheets of resin such as polycarbonate and sheets of ceramic such as quartz may be used. As in Embodiment 1, when the electronic tag is held by the two thin sheets, both of the thin sheets may be made up of sheets of resin or sheets of ceramic, or one of the two thin sheets may be made up of the sheet glass while the other of either the sheet of resin or the sheet of ceramic. When using the sheet of resin, ethylene vinyl acetate copolymer or EVA is preferably used as the interlayer film. Thus, by using other materials than glass for the thin sheet, the strength of the panel can be enhanced or the weight of the panel can be reduced.

In addition, for the thin sheet made of sheet glass or made of the glass material such as sheet of resin or sheet of ceramic, any material can be used in terms of visible light transmission depending on the application of the panel according to the invention. For example, the panel according to the invention is applied to an automotive windshield, it is considered that an overall or partial transmission of the panel is made smaller than that of a normal glass.

## Claims

1. A panel comprising:
an electronic tag including an antenna and a radio chip connected to the antenna;
a plurality of thin sheets of a glass material which hold the electronic tag there between; and
a joint member which supports the electronic tag at a fixed position with respect to the thin sheets.

2. A panel comprising:
an electronic tag including an antenna and a radio chip mounted such that the radio chip is connected to the antenna so as to transmit identification information in response to a request provided from outside through a radio communication via the antenna;
a plurality of thin sheets of a glass material which are positioned such that surfaces thereof are made to face each other; and
at least one interlayer film which is interposed between the thin sheets so as to join the thin sheets to each other;
wherein said at least one interlayer film is superposed twofold or more in at least part of an area defined between the thin sheets with the electronic tag attached to the interlayer film so as to be held therebetween.

3. A panel according to Claim 2, wherein a coloring layer which interrupts light transmission is formed to face at least one of the thin sheets so as to cover and hide the electronic tag thereunder.

4. A panel according to Claim 2 or 3, wherein in a cross section of the electronic tag taken along a perpendicular direction with respect to a surface of the thin sheets, the electronic tag is molded into a shape of which the thickness gradually reduces along a longitudinal direction of the thin sheets.

5. A panel according to any of Claims 1 to 4, wherein the thin sheets are formed into a shape of an automotive windshield.

6. A panel according to any of Claims 1 to 4, further comprising a fixing frame which holds the panel at a fixed position with respect to another member.

7. A panel comprising:
a thin sheet made of a glass material;
a fixing frame which holds the thin sheet at a fixed position;
an electronic tag including an antenna and a radio chip mounted such that the radio chip is connected to the antenna so as to transmit identification information in response to a request provided from outside through a radio communication via the antenna and disposed between the thin sheet and the fixing frame;
a first interlayer film which faces the thin sheets; and
a second interlayer film which faces the fixing frame; wherein
the electronic tag is attached to the first interlayer film and the second interlayer film so as to be held therebetween.

8. A manufacturing method of a comprising the steps of:
holding an electronic tag with a plurality of layers of interlayer films, the electronic tag comprising an antenna and a radio chip mounted such that the radio chip is connected to the antenna so as to transmit identification information in response to a request provided from outside through a radio communication via the antenna;
holding the interlayer films between thin sheets of a glass material which are disposed such that surfaces thereof are made to face each other; and
pressurizing or depressurizing the thin sheets so as to remove a void existing inside of the thin sheets which are made to face each other so that the interlayer films arc made to be joined to the thin sheets, respectively.

9. A panel manufacturing method comprising the steps of:
holding an electronic tag with a plurality of layers of interlayer films, the electronic tag comprising an antenna and a radio chip mounted such that the radio chip is connected to the antenna so as to transmit identification information in response to a request provided from outside through a radio communication via the antenna, and holding the interlayer films between thin sheets of a glass material which are disposed such that surfaces thereof are made to face each other; and
pressurizing or depressurizing the thin sheets so as to remove a void existing inside of the thin sheets which are made to face each other so that the interlayer films are made to be joined to the thin sheets, respectively.

10. A panel manufacturing method comprising the steps of:
holding between thin sheets of a glass material which are disposed such that surfaces thereof are made to face each other an interlayer film element in which an electronic tag is held with a plurality or layers of interlayer films, the electronic tag including an antenna and a radio chip mounted such that the radio chip is connected to the antenna so as to transmit identification information in response to a request provided from outside through a radio communication via the antenna; and
pressurizing or depressurizing the thin sheets so as to remove a void existing inside of the thin sheets which are made to face each other so that the interlayer films are made to be joined to the thin sheets, respectively.
